# EUROPEAN PATENT SPECIFICATION

(11) **EP 0 631 080 B1**
(45) Date of publication and mention of the grant of the patent: **02.01.1997**
(21) Application number: 94108433.7
(22) Date of filing: 01.06.1994
(51) Int. Cl.: F16L 11/12, F16L 33/08, F16L 33/02

(54) **A connector**
Verbindungsvorrichtung
Connecteur

(30) Priority: 23.06.1993 IT TO930142 U
(43) Date of publication of application: 28.12.1994
(73) Proprietor: SAIAG INDUSTRIA S.p.A., I-10073 Cirie' (Torino) (IT)
(72) Inventor: Mogavero, Cesare, I-10073 Cirie' (Torino) (IT)
(74) Representative: Gerbino, Angelo

(56) References cited:
- WO-A-91/14105
- DE-A- 2 721 090
- DE-A- 3 543 717
- US-A- 5 002 094
- US-A- 5 185 913

## Description

The present invention relates to a connector for fluid circuits, particularly the coolant circuit of an internal combustion engine, comprising a hose of elastomeric material and at least one clamping clip, shaped as a ring which can be opened along a generatrix and having means for varying the diameter of the ring (US-A-5 185 913).

During the fitting of known devices of the type indicated above, once an end of the hose has been fitted onto a union of another component of the circuit, the clip is wrapped around this end of the hose and is then tightened to prevent leakage of fluid between the hose and the union.

According to the prior art, in order to carry out these operations, the hoses and clips are made to arrive at an assembly station separately and are then joined together, considerably increasing storage and assembly costs.

In order to prevent this problem, the subject of the present invention is a connector of the type indicated above, characterized in that, in its external surface adjacent at least one end, the hose has a circumferential groove in which at least one locating pin projects radially, and in that at least one hole is formed in the ring of the clip so that, when the ring of the clip is positioned in the groove, the locating pin enters the hole in the ring, locating the clip angularly relative to the hose.

The device according to the invention can thus be stored and then supplied to an assembly station as a single, preassembled item in which the loosened ring of the clip is positioned in the groove of the hose with the locating pin inserted in the hole in the ring.

This ensures that the clip is positioned correctly relative to the hose both axially and circumferentially.

Moreover, it prevents the person employed in fitting the hose on the union and subsequently tightening the clip from wasting time on any correction of its position, and from fitting it incorrectly, for example, so that the plane defined by the ring is not perpendicular to the axis of the hose.

Further advantages of the present invention will become clear from the detailed description which follows with reference to the appended drawings provided purely by way of non-limiting example, in which:
Figure 1 is a perspective view of the connector according to the invention, fitted in a cooling system of the internal combustion engine of a motor vehicle,
Figure 2 is a perspective view of the connector according to the invention, comprising a hose and a clip in the assembled configuration, on an enlarged scale, and
Figure 3 is a perspective view of the clip and the hose of Figure 2 in the disassembled configuration.

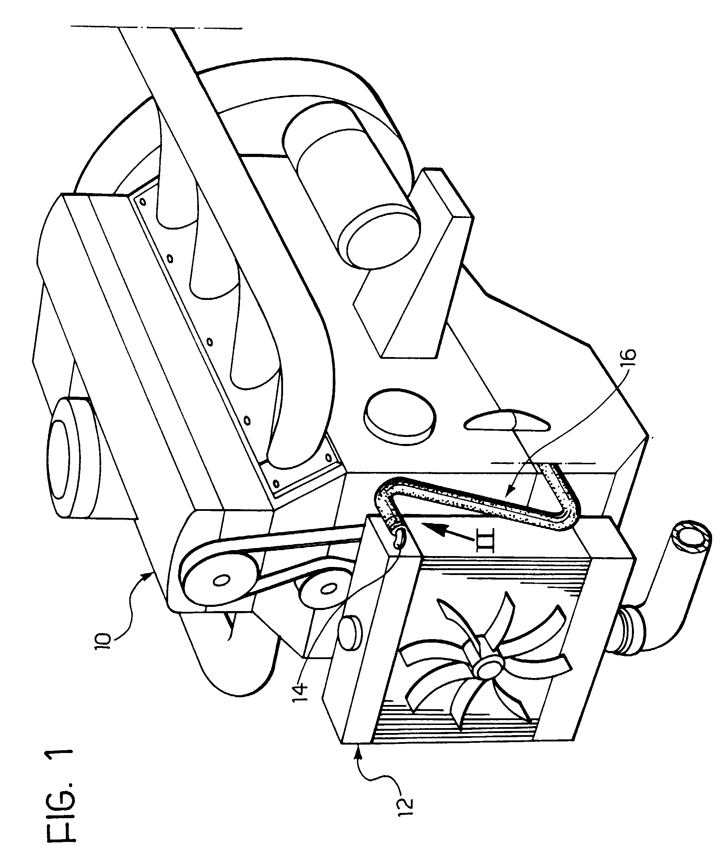

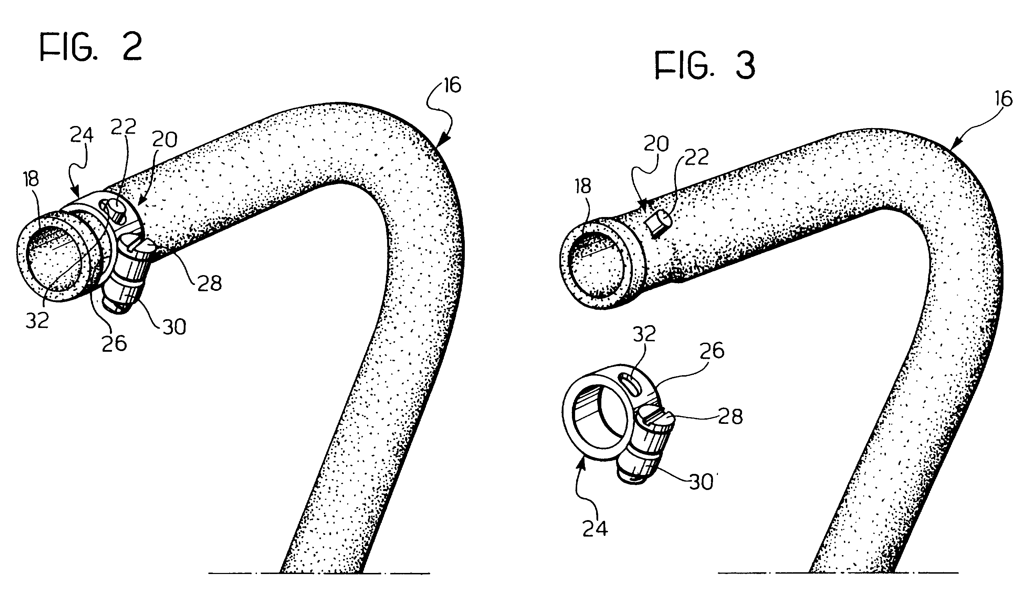

A cooling system for an internal combustion engine 10 (Figure 1) of a motor vehicle comprises a radiator 12, on a union 14 of which a hose 16 of elastomeric material incorporating a reinforcing fabric 18 is fitted (Figures 2 and 3).

In its external surface, adjacent the end which is fitted on the union 14, the hose 16 has a circumferential groove 20 in which a locating pin 22 projects radially.

The overall height of the pin 22 is preferably between 1 and 3 times the depth of the groove 20.

A clamping clip 24, shaped as a ring 26 which can be opened along a generatrix and having means of known type for reducing the diameter of the ring 26, is disposed in the groove 20.

The means comprise a screw 28 which is supported by one end of the ring 26 and can be engaged in a respective female thread 30 carried by the opposite end of the ring 26.

The groove 20 ensures that the clip 24 remains in the desired axial position on the hose 16 and prevents its general plane from being displaced from a condition in which it is substantially perpendicular to the axis of the hose 16.

The ring 26 of the clip 24 also has a hole 32 in which the pin 22 can be inserted with slight clearance.

The assembly constituted by the hose 16 and the clip 24 can thus be stored as a single item, the loosened clip 24 being positioned in the groove 20 and kept therein by virtue of the engagement between the pin 22 and the hole 32.

This engagement not only prevents the clip 24 from coming off the hose 16 but also locates it angularly around the circumference.

The task of the person employed at the assembly station - where the hose 16 is fitted on the union 14 and the clip 24 is tightened around the hose 16 - who can operate on pre-oriented parts, is therefore facilitated.

## Claims

1. A connector for fluid circuits, particularly the coolant circuit of an internal combustion engine (10), comprising a hose (16) of elastomeric material and at least one clamping clip (24), shaped as a ring (26) which can be opened along a generatrix and having means (28, 30) for varying the diameter of the ring (26),
the connector being characterized in that, in its external surface adjacent at least one end, the hose (16) has a circumferential groove (20) in which at least one locating pin (22) projects radially, and in that at least one hole (32) is formed in the ring (26) of the clip (24) so that, when the ring (26) of the clip (24) is positioned in the groove (20), the locating pin (22) enters the hole (32) in the ring (26) locating the clip (24) angularly relative to the hose (16).

2. A device according to Claim 1, characterized in that the at least one pin (22) has an overall height of between 1 and 3 times the depth of the groove (20).

## Patentansprüche

1. Verbindungsvorrichtung für Fluidkreisläufe, besonders für den Kühlkreislauf eines Verbrennungsmotors (10), wobei die Vorrichtung einen Schlauch (16) aus einem gummiartigen Kunststoff sowie zumindest eine Schlauchklemme (24) besitzt, die als Ring (26) ausgebildet ist, der längs einer Erzeugenden geöffnet werden kann und eine Einrichtung (28, 30) besitzt, um den Durchmesser des Rings (26) zu verändern,
wobei die Verbindungsvorrichtung dadurch gekennzeichnet ist, daß der Schlauch (16) an seiner Außenfläche neben zumindest einem Ende eine am Umfang verlaufende Rille (20) besitzt, in der zumindest ein Einstellzapfen (22) radial vorspringt, und daß im Ring (26) der Klemme (24) zumindest eine Öffnung (32) so ausgebildet ist, daß der Einstellzapfen (22) dann, wenn der Ring (26) der Klemme (24) in der Rille (20) angeordnet ist, in die Öffnung (32) im Ring (26) eindringt, wodurch die Klemme (24) winkelmäßig relativ zum Schlauch (16) angeordnet wird.

2. Vorrichtung gemäß Anspruch 1, dadurch gekennzeichnet, daß der zumindest eine Zapfen (22) eine Gesamthöhe besitzt, die zwischen der einfachen und der dreifachen Tiefe der Rille (20) liegt.

## Revendications

1. Raccord pour circuits de fluide, notamment le circuit de fluide de refroidissement d'un moteur à combustion interne (10), comprenant un tube souple (16) d'une matière élastomère et au moins une pince de serrage (24), en forme de bague (26) qui peut être ouverte le long d'une génératrice et qui comporte un dispositif (28, 30) destiné à faire varier le diamètre de la bague (26),
le raccord étant caractérisé en ce que, à sa surface externe à proximité d'au moins une extrémité, le tube souple (16) possède une gorge circonférentielle (20) dans laquelle dépasse radialement au moins une broche de positionnement (22), et en ce qu'un trou au moins (32) est formé dans la bague (26) de la pince (24) afin que, lorsque la bague (26) de la pince (24) est positionnée dans la gorge (20), la broche de positionnement (22) pénètre dans le trou (32) de la bague (26) et positionne angulairement la pince (24) par rapport au tube souple (16).

2. Dispositif selon la revendication 1, caractérisé en ce que la broche au moins (22) a une hauteur totale comprise entre une et trois fois la profondeur de la gorge (20).
